Europäisches Patentamt

European Patent Office

Office européen des brevets

(11) Publication number: **0 328 295**
A2

# EUROPEAN PATENT APPLICATION

(21) Application number: 89300980.3

(22) Date of filing: 01.02.89

(51) Int. Cl.⁴: **B 26 F 3/02**
B 65 H 35/10, B 26 F 1/24,
B 26 F 1/20

(30) Priority: 06.02.88 GB 8802744

(43) Date of publication of application:
16.08.89 Bulletin 89/33

(84) Designated Contracting States:
CH DE FR GB IT LI

(71) Applicant: AUTOBOND LIMITED
Heanor Gate Road
Heanor Derbyshire (GB)

(72) Inventor: Gilmore, Thomas George
c/o Autobond Limited Heanor Gate Road
Heanor Derbyshire. DE7 7RJ (GB)

(74) Representative: Campbell, Iain Angus et al
Swindell & Pearson 48 Friar Gate
Derby DE1 1GY (GB)

The title of the invention has been amended (Guidelines for Examination in the EPO, A-III, 7.3).

(54) Sheet separating apparatus.

(57) A laminating film for applying as a coating to a web of overlapped or underlapped sheets has a line of cuts or perforations (16,14) near one or both of its edges to provide a tear initiation zone when the web of coated sheets arrives at a desheeter where the end sheet is separated from the web by mechanical means not involving knives or shears.

FIG.1

**Description**

## Improvements in or relating to Laminating Films

The present invention concerns improvements in or relating to laminating films, especially films for laminating with paper sheets.

A decorative or protective film of clear plastics material is often applied to printed sheets to be used, for example as book jackets. The laminating operation is carried out on a machine which feeds a series of separate sheets to a laminating station where the sheets, with an edge portion of one over-lapping or under-lapping its neighbour, has a continuous film of clear plastics material laminated thereto. It will be realized therefore that the product of the machine is a roll of paper sheets arranged in end-to-end over-lapping relationship, coated on one side with a continuous film of plastics material. A web of sheets of this nature will be referred to hereinafter as "laminated sheets of the type defined".

It is then necessary to return the sheets to their separate condition for further processing, and in view of the automated nature of this further processing it is essential that the size of the sheets remains unaltered. It will be realized therefore that a simple guillotine operation to separate one sheet from its neighbour cannot take place, as this would result in at least one part of the sheet being lost.

Various methods have been suggested in the past for overcoming this problem. The most simple is to separate one sheet from another by hand. Normally a manual separation operation involves the use of a knife, the blade of which is inserted between the over-lapped or under-lapped portions of adjacent sheets and run from one side of the web to the other to cut the film along the edge of the sheet to which it is adhered.

Various attempts have been made in the past to automate this process, for example mechanical and electronic means have been provided to sense the over-lapping edge of a sheet and to cut through only the laminations along this edge as the web moves through the cutter. This has proved to be a difficult and expensive arrangement which is never completely satisfactory as, for example, it can never be guaranteed that the edge to be cut invariably arrives at the correct position in the cutter.

Our prior U.K. Patent 2154923B discloses a much improved arrangement where we utilise the knowledge that sheets can be separated by tearing along the film (which tear will follow the edge of the sheet) provided that a tear initiation cut is provided at the edge of the web. In our prior Patent we have provided such a cut, but surprisingly, not coincident with the tear line but transverse to it. This has resulted in a very satisfactory arrangement which overcomes the disadvantages inherent in existing automatic and manual sheet separating methods and means.

The present invention has for one of its objects the provision of a laminating film which introduces to the web a tear initiation area simultaneously with the formation of the web.

According to the present invention there is provided a laminating film for use in the manufacture of a web of laminated sheets of the type defined, in which the film adjacent to at least one of its edges, prior to its presentation to the sheets to which it is to be laminated, is provided with a continuous line of perforations extending substantially parallel to the edge of the sheet.

The perforations may be punched holes or slots or cut lines or slits.

Further according to the present invention there is provided a machine for treating a laminating film for use in the production of laminated sheets of the type defined, said machine having means for forming a line of perforations through the film near at least one of its edges parallel to the said edge(s).

Preferably the perforations are holes punched through the film but alternatively they may be longitudinal cut lines.

Preferably the machine includes a spiked disk for providing the perforations, the spikes having any convenient cross section, thereby producing any conveniently shaped perforations.

Alternatively the machine includes a circular blade having discontinuities in its circumference whereby the lines are cut at spaced intervals.

Preferably the disk or blade is freely rotatably mounted and is held against a roll of laminating film prior to the removal of film from the roll. Preferably the disk or blade is held against the roll by gravity. Alternatively, spring, hydraulic, pneumatic or any other convenient means may be utilised to provide the appropriate perforating or cutting pressure.

Further according to the present invention there is provided a laminator for forming a web of laminated sheets of the type defined in which the laminating film feed means includes a machine of the type described in any of the preceeding 5 paragraphs.

Preferably the laminator incorporates sheet separating means downstream of its laminating means, the separating means comprising an arrangement for tensioning the web, whereby it tears at an over-lapped or under-lapped area to provide separate sheets. Preferably the tensioning means inlude also means for applying a twist to the web to assist in the initiation of the tear.

An embodiment of the present invention will now be described by way of example only with reference to the accompanying drawings in which:-

Figure 1 shows a reel of laminating film;

Figure 2 shows a diagrammatic plan of a laminating and de-sheeting apparatus; and

Figure 3 shows a diagrammatic elevation of the apparatus.

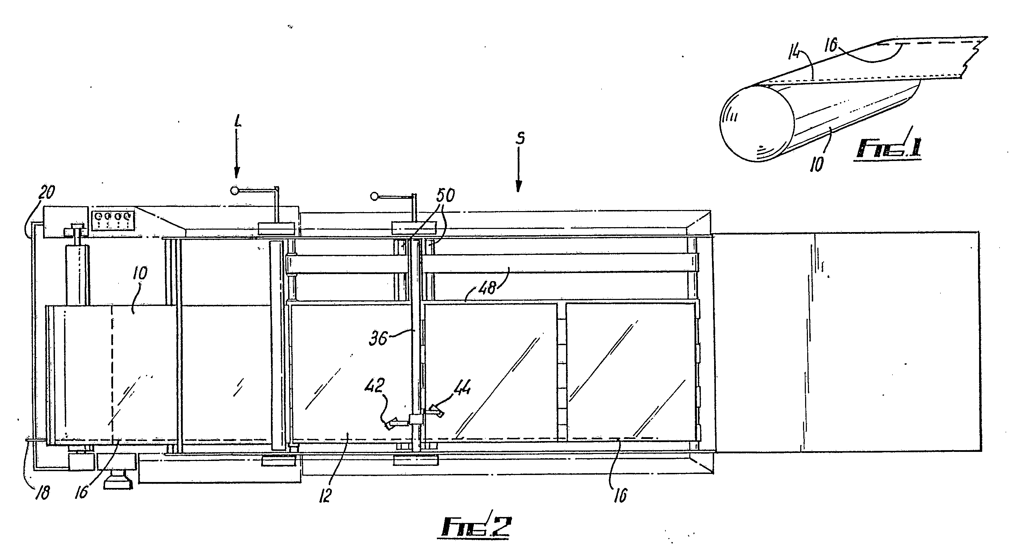

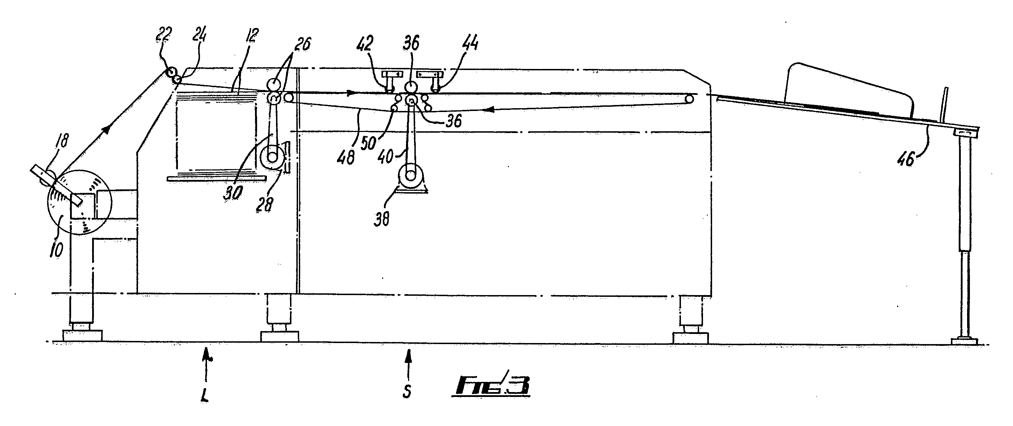

Figure 1 shows a reel of film 10 to be subsequently laminated on over or under-lapped paper sheets 12 in the combined laminating L and sheet separating S apparatus shown in Figs 2 and 3. The film is provided, parallel to one of its edges and near that edge with a line of perforations 14. Alternatively it can, as illustrated in Figs 1 and 2, be provided with a line of spaced slits or cuts 16. The film can be provided with perforations or cuts along one or both of its edges, the perforations or cuts being formed in the film by a circular perforator or blade 18 biased against the reel of film when it is rotatably supported at the feed end of the apparatus. The perforating disk or blade 18 has a configuration dependent upon the nature of the perforation or slits to be formed in the film. For example, if circular perforations are required the perforating disk 18 may comprise a disk by having a plurality of spikes projecting radially from its periphery. Alternatively if slits 16 are required the disk is a circular blade having discontinuities around its sharpened circumference, so that no slit is provided in the areas of discontinuity. It will be evident that any perforator, punch or blade arrangement providing some form of hole, slit or discontinuity through the film ink a line parallel to one or both of its outer edges will be suitable.

Figs 2 and 3 do not illustrate in detail the means for mounting the perforator or blade 18 as these do not form part of the present invention. It will be realized, however, that the blade can be adjustably mounted on a freely rotating shaft 20 which can move towards the centre of the reel of film 10 as the diameter of the reel decreases, on removing film from the reel. Means to bias the disk against the reel are provided and these means can comprise gravity, springs, hydraulic, pneumatic or any other suitable means. It will be readily apparent that the depth of perforation or cut achieved by the perforating disk or blade 18 is preferably through one film thickness only but this is not essential and perforations can be formed through two or more thicknesses of film on the reel.

As the laminating means of the apparatus do not form part of the present invention they will not be described in detail but the apparatus can be seen to include the normal anti-curl bar 22, guide rollers (only one of which, 24 is shown) and a pair of rollers 26 which are urged towards each other such that they exert a pressure on the paper sheet 12 and laminate film applied to the under or overlapped sheets passing therebetween. One of the rollers 26 is driven by a drive motor 28 by way of a drive belt 30.

Spaced downstream of the pressure rollers are a pair of separating rollers 36, at least one of which is driven by a motor 38 by way of drive belt 40. The separating rollers 36 are spaced from the pressure rollers 26 by a distance greater than the length of the sheet to be separated, and arranged on the side of the separating rollers 36 nearest to the pressure rollers 26 there is provided a sheet deflecting wheel 42, the axis of rotation of which is angled to the longitudinal axis of the web. The speed of rotation of the separating rollers 36 is greater than that of the pressure rollers 26 so that a tension is applied to the web and this tension, in combination with the distortion at the edge of the sheet caused by the deflecting wheel 42, gives rise to a transverse ripping action through the laminating film which is encouraged by the area of weakness provided at the edge of the film by the perforations 14 or slits 16. As a result, when the film is ripped across the edge of one sheet the downstream sheet is pulled away from the upstream sheet by the separating rollers, and after being returned to its original orientation by correcting rollers 44 downstream of the separating rollers 36, the separated sheet is transported to a sheet collecting tray 46 at the outlet from the machine by an arrangement of continuous conveyor belts 48, the upper run of which extends from the outlet from the pressure rollers 26 to the outlet from the machine with an interruption guided by two pairs of S-rollers 50 round the lower separating roller 36.

Various modifications can be made without departing from the scope of the invention. For example it is possible to provide the slits or perforations in the film as the film is being reeled on to or off of a reel 10 so that there is no need to provide a perforating or slitting arrangement on the laminating and de-sheeting apparatus. This means that the perforations or slits can be provided by the film manufacturer as opposed to the user of the film.

As mentioned above, any line of weakness which will assist in the generation of a tear at the over-lap or under-lap between sheets is suitable and perforations of any shape or slits of any length consistent with the smooth and efficient operation of the laminating and separating apparatus may be provided. The film can be perforated along one or more lines parallel to the edge at one or both sides of the film and any laminating and sheet separating apparatus whether separate or combined, automated or mechanical can be utilised.

## Claims

1. A laminating film for use in the manufacture of a web of laminated sheets of the type defined, characterised in that the film (10) adjacent to at least one of its edges, prior to its presentation to the sheets (12) to which it is to be laminated, is provided with a continuous line of perforations (14,16) extending substantially parallel to the edge of the sheet.

2. A machine for treating a laminating film for use in the production of laminated sheets of the type defined, characterised in that it includes means for forming a line of perforations (14, 16) through the film (10) near at least one of its edges parallel to the said edge(s)

3. A machine as claimed in claim 2, in which the perforations are holes punched through the film, alternatively the holes are longitudinal cut lines.

4. A machine as claimed in claim 3, characterised in that it includes a spiked disk (18) for providing the perforations.

5. A machine as claimed in claim 3, characterised in that it includes a a circular blade (18) having discontinuities in its circumference whereby the lines are cut at spaced intervals.

6. A machine as claimed in claim 4 or claim 5, characterised in that the disk or blade (18) is freely rotatably mounted and is held against a roll of laminating film (10) prior to the removal of film from the roll.

7. A machine as claimed in claim 6, characterised in that the disk or blade (18) is held against the roll by gravity or by resilient hydraulic or pneumatic means.

8. A laminator for forming a web of laminated sheets of the type defined, characterised in that the laminating film feed means includes a machine of the type claimed in any one of claims 2 to 7.

9. A laminator as claimed in claim 8, characterised in that it incorporates sheet separating means (36) downstream of its laminating means (22, 24, 26), the separating means comprising an arrangement for tensioning the web, whereby it tears at an over-lapped or under-lapped area to provide separate sheets.

10. A laminator as claimed in claim 9, in which the tensioning means include also means (42) for applying a twist to the web to assist in the initiation of the tear.

FIG.1

FIG.2

EP 0 328 295 A2

FIG 3